# EUROPEAN PATENT SPECIFICATION

(11) **EP 3 308 445 B1**
(45) Date of publication and mention of the grant of the patent: **19.02.2020**
(21) Application number: 16742397.9
(22) Date of filing: 15.06.2016
(51) Int. Cl.: H02J 7/00, B60L 53/24, B60L 53/80, B60L 53/30

(54) **MOBILE CHARGING STATION**
MOBILE LADESTATION
STATION DE CHARGEMENT MOBILE

(30) Priority: 15.06.2015 IT UB20151387
(43) Date of publication of application: 18.04.2018
(73) Proprietor: Meta System S.p.A., 42124 Reggio Emilia (IT)
(72) Inventor: SIMONAZZI, Giuseppe, 42124 Reggio Emilia (IT)
(74) Representative: Grana, Daniele
(86) International application number: PCT/IB2016/053521
(87) International publication number: WO 2016/203383

(56) References cited:
- EP-A2- 2 006 974
- EP-A2- 2 572 923
- WO-A1-2011/019855
- DE-A1-102009 037 367
- US-A1- 2015 054 460

## Description

### Technical Field

The present invention relates to an upgraded mobile charging station.

### Background Art

The use is well known and increasingly widespread of special stations of different type, shape and size for the electric charging of batteries of electric vehicles.

In particular, with reference to the so-called "car sharing" services of electric vehicles, that is, to all those public or private services that allow for the use of an electric vehicle on booking and paying according to the actual use, the installation is known of charging stations in parking lots or, anyway, in appropriate areas for the picking and delivery of vehicles.

Generally, so-called fixed charging stations are used, i.e. installed in a non-removable way in predefined positions, e.g. in a parking lot, and so-called mobile charging stations, i.e. stations that can be transported and the position of which may vary from time to time, depending on specific needs.

The mobile charging stations, therefore, do without or at least reduce the need for dedicated and specially prepared parking lots.

The mobile charging stations of known type comprise a bearing structure, commonly consisting of an outer container body that substantially extends upwards and inside which are housed the electronics for charging and the battery pack.

Specifically, such electronics comprise a charging circuit connected to the battery pack and having one or more connectors accessible from outside and connectable to an electric vehicle to be charged.

The station electronics, furthermore, comprise a special circuit connectable to an external power line and adapted to manage the charging of the battery inside of the station itself.

Furthermore, the charging stations generally comprise a display for displaying the state of charging and of the internal battery, in addition to any appropriate control pushbuttons.

The mobile charging stations of known type, however, have some drawbacks.

In particular, after the internal battery is depleted, the mobile stations must necessarily be replaced with others having fully charged batteries.

The assigned operators must therefore necessarily move periodically along predefined paths with appropriate motor vehicles, the type e.g. of vans equipped with a lifting arm, so as to replace the depleted stations with fully charged stations.

The motor vehicles used can however be loaded with a limited number of stations, thus requiring a considerable number of motor vehicles along several paths.

Furthermore, all depleted stations must necessarily be brought back to one or more collecting centers and, therefore, they are unusable for the time necessary for charging the respective battery packs.

DE102009037367A1 discloses a trolley having a battery for powering e.g. a driving motor of a vehicle to which the trolley is attached. The battery is fixed on a bottom plate that is frictionally connected to a subfloor of the trolley by a lock.

### Description of the Invention

The main aim of the present invention is to devise an upgraded mobile charging station that allows to simplify and speed up the transport and charging operations of the stations.

Another object of the present invention is to devise an upgraded mobile charging station having simplified electronics and affordable costs.

The above mentioned objects are achieved by the present mobile charging station according to the characteristics of claim 1.

### Brief Description of the Drawings

Other characteristics and advantages of the present invention will become better evident from the description of a preferred, but not exclusive, embodiment of an mobile charging station, illustrated by way of an indicative, but nonlimiting, example in the accompanying drawings, wherein:
Figure 1 is an axonometric view of an mobile charging station according to the invention;
Figures 2 to 6 schematically illustrate the replacement of the removable battery pack of a station according to the invention.

### Embodiments of the Invention

With particular reference to such figures, globally indicated with reference number 1 is an upgraded mobile charging station positionable inside areas intended for charging electric vehicles.

The station 1 comprises a bearing structure 2 and an electric charging circuit 3 supported by the bearing structure 2 and having at least an output connector 4 connectable to a charging circuit of an electric vehicle.

Advantageously, the station 1 also comprises at least a removable battery pack 5 and coupling/uncoupling means 6 of the removable battery pack 5.

In particular, these coupling/uncoupling means 6 are positionable:
- in a coupling configuration, wherein the removable battery pack 5 is locked together with the bearing structure 2 and is connected to the electric charging circuit 3, or
- in an uncoupling configuration, wherein the removable battery pack 5 can be removed from the bearing structure 2.

Advantageously, therefore, once dead, the removable battery pack 5 can be removed from the station 1, thus simplifying and speeding up accordingly the transport and charging operations of the stations.

In fact, this way the transport is no longer necessary of the whole dead stations 1 to a charging center, but it is instead possible to move only the respective removable battery packs 5 for charging.

This way the assigned operators can therefore move by means of a single motor vehicle a large number of removable battery packs 5, allowing a far from negligible reduction in the number of motor vehicles required, with a consequent cost reduction.

Furthermore, the station 1 has simplified electronics and is therefore less expensive than the mobile charging stations of known type.

In particular, while the stations of known type have an electric circuit for the charging of electric vehicles and a further electric circuit adapted instead to allow the charging of the internal battery of the station itself at a charging center, the station 1 according to the invention only has the electric charging circuit 3 connectable to an electric vehicle.

In fact, the station 1 does not have a further electric circuit for charging the removable battery pack 5, since only the removable battery pack 5 is moved and charged.

With reference to the particular embodiment illustrated in the figures, the bearing structure 2 is composed of a container body which extends substantially upwards and which has a seat 7 for housing the removable battery pack 5.

In particular, the housing seat 7 has an appropriate opening 8 for the insertion and removal of the removable battery pack 5.

Preferably, still with reference to the particular embodiment of the station 1 shown in the figures, the housing seat is formed at a lower portion of the container body 2 and the opening 8 of the housing seat 7 is made substantially at the bottom of the container body itself.

Alternative embodiments cannot however be ruled out.

For example, the housing seat 7 for the removable battery pack 5 may be made at the upper portion of the bearing structure 2, while the electric charging circuit may be arranged at the bottom of the bearing structure 2 or, in any case, below the removable battery itself.

This way, the removable battery pack 5 may be extracted from an appropriate upper opening formed on the bearing structure 2, without moving the whole station 1. In this case, therefore, the replacement of a dead removable battery pack 5 with a fully charged one would be carried out only by moving the battery packs themselves.

Preferably, the station 1 also comprises a hermetic closure element of the opening 8 of the housing seat 7, not shown in the figures, adapted to allow the perfect isolation of the removable battery pack 5 from the external environment once positioned and locked inside the seat 7.

According to a possible embodiment, the coupling/uncoupling means 6 comprise one or more grip elements made at one or more portions of said removable battery pack 5 and one or more respective hooks associated with the bearing structure 2 and movable between:
- said uncoupling configuration, wherein each hook is substantially moved away from the respective grip element on the removable battery pack 5, and
- said coupling configuration, wherein each hook is engaged on a respective grip element for the fixing of the removable battery pack 5 to the bearing structure 2.

Preferably, the movement between the aforementioned uncoupling and coupling configurations is controlled by the same lifting hook of the vehicle V.

In practice, therefore, the lifting hook mounted on the vehicle V is able, with a single mechanical and/or electronic action/procedure, to control the uncoupling of the removable battery pack 5 from the bearing structure 2.

Conveniently, the station 1 can comprise appropriate locking means of the coupling/uncoupling means 6 in the coupling configuration, i.e. when the removable battery pack 5 is fixed to the bearing structure 2, so as to prevent the removable battery pack from being removed by unauthorized people.

In this case, the station 1 can envisage the use of electronic authentication and identification means operatively connected to the locking means and adapted to disable the locking means to allow the movement of the coupling/uncoupling means 6 from the coupling configuration to the uncoupling configuration.

Such electronic authentication and identification means may e.g. comprise a radio wave receiving device, the type of a transponder or the like, adapted to receive at least an identification signal sent via an appropriate transmitter by an assigned operator, prior to the removal of the removable battery pack 5.

Preferably, the electric charging circuit 3 also comprises a pair of laminar contacts positioned inside the housing seat 7 and adapted to allow a quick electric connection to the removable battery pack 5. In fact, such contacts are positionable directly in contact with the poles of the removable battery pack 5 once this is arranged inside of said housing seat 7 and is hooked to the bearing structure 2.

Different embodiments cannot however be ruled out.

The connection between the electric charging circuit 3 and the removable battery pack 5 can e.g. be carried out by means of contactless coupling means, of the induction type or the like.

In addition, the station comprises a control panel 9, having a display and one or more control pushbuttons.

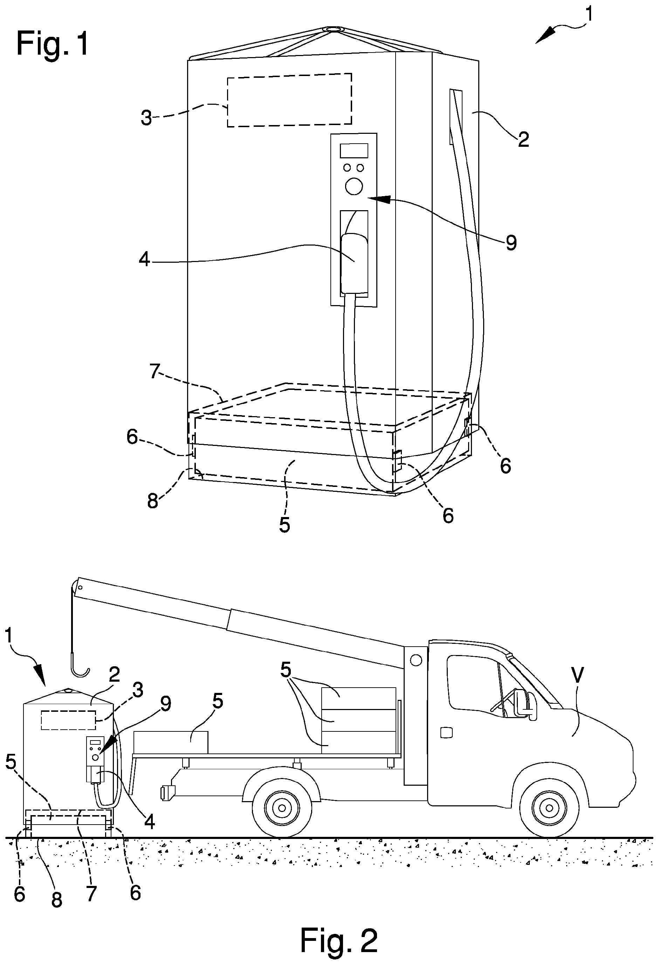

The use of the station 1 during the replacement of the removable battery pack 5 is described briefly below and is schematically illustrated in figures 2 to 6.

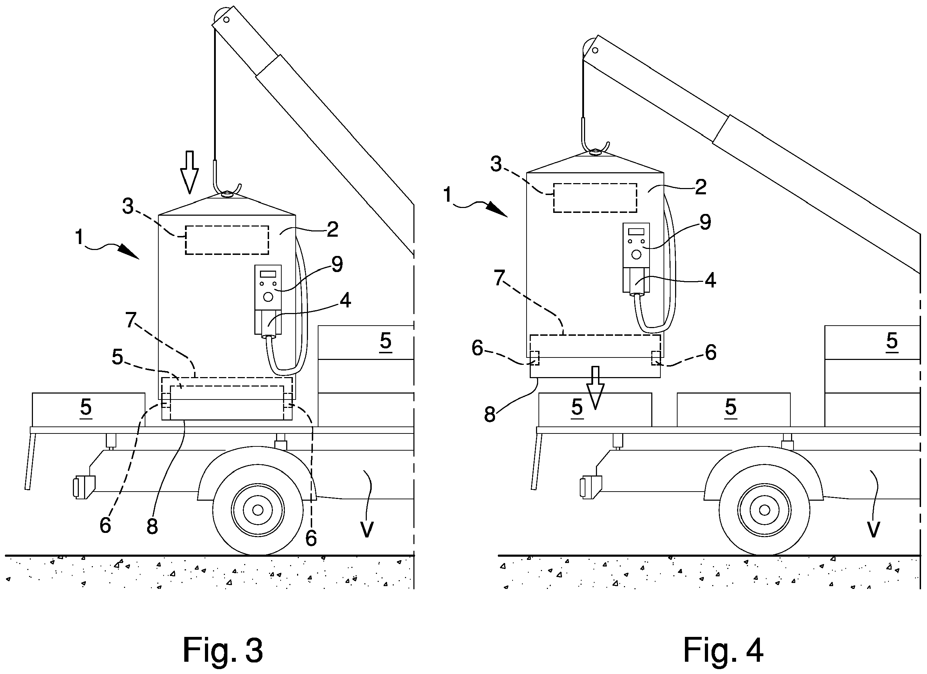

An operator in charge of the replacement of a first removable battery pack 5 first picks the station 1 up with appropriate equipment and places it on the motor vehicle V (Figures 2 and 3).

Next, the operator positions the coupling/uncoupling means 6 from the coupling configuration to the uncoupling configuration. This way the first removable battery pack 5 is disconnected from the container body 2.

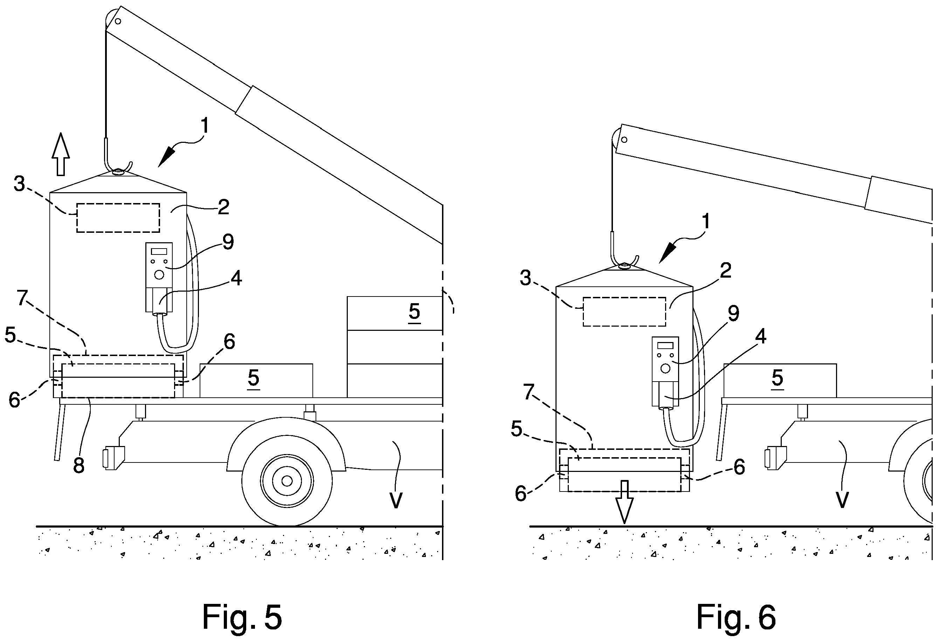

The operator then raises the container body 2 with the electric charging circuit 3, and separates it from the first removable battery pack 5, to place it on top of a second removable battery pack 5 (Figures 4 and 5).

The operator then positions the coupling/uncoupling means 6 from the uncoupling configuration to the coupling configuration. This way the second removable battery pack 5 is locked together with the container body 2.

At this point, the operator can reposition the station 1 to the location intended for the charging of the electric vehicles (Figure 6).

It has in practice been found that the described invention achieves the intended objects.

## Claims

1. Mobile charging station (1) positionable inside areas intended for charging electric vehicles , comprising at least a bearing structure (2), at least an electric charging circuit (3) of the battery for an electric vehicle (V), said electric charging circuit (3) being supported by said bearing structure (2) and having at least an output connector (4) connectable to said electric vehicle (V), and at least a removable battery pack (5), comprising:
- coupling/uncoupling means (6) of said removable battery pack (5) which can be positioned in a coupling configuration, wherein said removable battery pack (5) is locked together with said bearing structure (2) and is connected to said electric charging circuit (3), and in an uncoupling configuration, wherein said removable battery pack (5) can be removed from said bearing structure (2); and
- locking means configured to lock said coupling/uncoupling means (6) in said coupling configuration and electronic identification and authentication means which are operatively connected to said locking means and adapted to disable said locking means to allow the movement of said coupling/uncoupling means (6) from said coupling configuration to said uncoupling configuration.

2. Station (1) according to claim 1, **characterized by** the fact that said bearing structure (2) comprises at least an outer container body (2) having at least a housing seat (7) for said removable battery pack (5).

3. Station (1) according to one or more of the preceding claims, **characterized by** the fact that said housing seat (7) has at least an opening (8) for the insertion and removal of said removable battery pack (5).

4. Station (1) according to one or more of the preceding claims, **characterized by** the fact that said housing seat (7) is formed at a substantially lower portion of said container body (2).

5. Station (1) according to one or more of the preceding claims, **characterized by** the fact that said opening (8) of the housing seat (7) is made substantially at the bottom of said container body (2).

6. Station (1) according to one or more of the preceding claims, **characterized by** the fact that it comprises at least a hermetic closure element of said opening (8) of the housing seat (7).

7. Station (1) according to one or more of the preceding claims, **characterized by** the fact that said coupling/uncoupling means (6) comprise at least a grip element made at at least one portion of said removable battery pack (5) and at least one hook associated with said bearing structure (2) and movable between said uncoupling configuration, wherein said hook is substantially moved away from said grip element, and said coupling configuration, wherein said hook is engaged on said grip element for the fixing of said removable battery pack (5) to said bearing structure (2).

8. Station (1) according to one or more of the preceding claims, **characterized by** the fact that said electronic identification and authentication means comprise at least a radio wave receiving device adapted to receive at least an identification signal.

9. Station (1) according to one or more of the preceding claims, **characterized by** the fact that said electric charging circuit (3) comprises at least a pair of laminar contacts positioned inside said housing seat (7) and in contact with the poles of said removable battery pack (5), when said removable battery pack (5) is arranged inside said housing seat (7) and coupled to said bearing structure (2).

## Patentansprüche

1. Mobile Ladestation (1), die innerhalb von Bereichen positionierbar ist, die zum Laden von Elektrofahrzeugen bestimmt sind, umfassend mindestens eine Tragstruktur (2), mindestens eine elektrische Ladeschaltung (3) der Batterie für ein Elektrofahrzeug (V), wobei die elektrische Ladeschaltung (3) von der Tragstruktur (2) gestützt wird und mindestens ein Ausgangsverbindungsstück (4) aufweist, das mit dem Elektrofahrzeug (V) verbindbar ist, und mindestens einen entfernbaren Batteriepack (5), umfassend:
- Kopplungs-/Entkopplungsmittel (6) des entfernbaren Batteriepacks (5), die in einer Kopplungskonfiguration, in der der entfernbare Batteriepack (5) mit der Tragstruktur (2) verriegelt ist und mit der elektrischen Ladeschaltung (3) verbunden ist, und in einer Entkopplungskonfiguration positioniert werden können, wobei der entfernbare Batteriepack (5) von der Tragstruktur (2) entfernt werden kann; und
- Verriegelungsmittel, die konfiguriert sind, um die Kopplungs-/Entkopplungsmittel (6) in der Kopplungskonfiguration und elektronische Identifizierungs- und Authentifizierungsmittel zu verriegeln, die mit den Verriegelungsmitteln wirkverbunden und angepasst sind, um die Verriegelungsmittel zu deaktivieren, um die Bewegung der Kopplungs-/Entkopplungsmittel (6) von der Kopplungskonfiguration zu der Entkopplungskonfiguration zu ermöglichen.

2. Station (1) nach Anspruch 1, **dadurch gekennzeichnet, dass** die Tragstruktur (2) mindestens einen äußeren Behälterkörper (2) mit mindestens einem Gehäusesitz (7) für den entfernbaren Batteriepack (5) umfasst.

3. Station (1) nach einem oder mehreren der vorhergehenden Ansprüche, **dadurch gekennzeichnet, dass** der Gehäusesitz (7) mindestens eine Öffnung (8) zum Einsetzen und Entfernen des entfernbaren Batteriepacks (5) aufweist.

4. Station (1) nach einem oder mehreren der vorhergehenden Ansprüche, **dadurch gekennzeichnet, dass** der Gehäusesitz (7) an einem im Wesentlichen unteren Abschnitt des Behälterkörpers (2) ausgebildet ist.

5. Station (1) nach einem oder mehreren der vorhergehenden Ansprüche, **dadurch gekennzeichnet, dass** die Öffnung (8) des Gehäusesitzes (7) im Wesentlichen am Boden des Behälterkörpers (2) gefertigt ist.

6. Station (1) nach einem oder mehreren der vorhergehenden Ansprüche, **dadurch gekennzeichnet, dass** sie mindestens ein hermetisches Verschlusselement der Öffnung (8) des Gehäusesitzes (7) umfasst.

7. Station (1) nach einem oder mehreren der vorhergehenden Ansprüche, **dadurch gekennzeichnet, dass** die Kopplungs-/Entkopplungsmittel (6) mindestens ein Griffelement, das an mindestens einem Abschnitt des entfernbaren Batteriepacks (5) gefertigt ist und mindestens einen Haken umfassen, der der Tragstruktur (2) zugeordnet und zwischen der Entkopplungskonfiguration beweglich ist, wobei der Haken im Wesentlichen von dem Griffelement und der Kopplungskonfiguration wegbewegt wird, wobei der Haken an dem Griffelement zum Befestigen des entfernbaren Batteriepacks (5) an der Tragstruktur (2) in Eingriff genommen wird.

8. Station (1) nach einem oder mehreren der vorhergehenden Ansprüche, **dadurch gekennzeichnet, dass** die elektronischen Identifikations- und Authentifizierungsmittel mindestens eine Funkwellenempfangsvorrichtung umfassen, die angepasst ist, um mindestens ein Identifikationssignal zu empfangen.

9. Station (1) nach einem oder mehreren der vorhergehenden Ansprüche, **dadurch gekennzeichnet, dass** die elektrische Ladeschaltung (3) mindestens ein Paar laminare Kontakte umfasst, die innerhalb des Gehäusesitzes (7) und in Kontakt mit den Polen des entfernbaren Batteriepacks (5) positioniert sind, wenn der entfernbare Batteriepack (5) innerhalb des Gehäusesitzes (7) angeordnet und mit der Tragstruktur (2) gekoppelt ist.

## Revendications

1. Station de charge mobile (1) pouvant être positionnée à l'intérieur de zones destinées à charger des véhicules électriques, comprenant au moins une structure porteuse (2), au moins un circuit de charge électrique (3) de la batterie pour un véhicule électrique (V), ledit circuit de charge électrique (3) étant supporté par ladite structure porteuse (2) et ayant au moins un connecteur de sortie (4) pouvant être connecté audit véhicule électrique (V), et au moins un bloc-batterie amovible (5), comprenant :
- des moyens de couplage/découplage (6) dudit bloc-batterie amovible (5) qui peuvent être positionnés dans une configuration de couplage, dans laquelle ledit bloc-batterie amovible (5) est verrouillé ensemble avec ladite structure porteuse (2) et est connecté audit circuit de charge électrique (3), et
dans une configuration de découplage, dans laquelle ledit bloc-batterie amovible (5) peut être retiré de ladite structure porteuse (2) ; et
- des moyens de verrouillage configurés pour verrouiller lesdits moyens de couplage/découplage (6) dans ladite configuration de couplage et des moyens d'identification et d'authentification électroniques qui sont connectés de manière fonctionnelle auxdits moyens de verrouillage et adaptés pour désactiver lesdits moyens de verrouillage pour permettre le mouvement desdits moyens de couplage/découplage (6) de ladite configuration de couplage à ladite configuration de découplage.

2. Station (1) selon la revendication 1, **caractérisée par le fait que** ladite structure porteuse (2) comprend au moins un corps de contenant externe (2) ayant au moins un siège de logement (7) pour ledit bloc-batterie amovible (5).

3. Station (1) selon une ou plusieurs des revendications précédentes, **caractérisée par le fait que** ledit siège de logement (7) a au moins une ouverture (8) pour l'insertion et le retrait dudit bloc-batterie amovible (5).

4. Station (1) selon une ou plusieurs des revendications précédentes, **caractérisée par le fait que** ledit siège de logement (7) est formé au niveau d'une partie sensiblement inférieure dudit corps de contenant (2).

5. Station (1) selon une ou plusieurs des revendications précédentes, **caractérisée par le fait que** ladite ouverture (8) du siège de logement (7) est réalisée sensiblement au fond dudit corps de contenant (2).

6. Station (1) selon une ou plusieurs des revendications précédentes, **caractérisée par le fait qu'**elle comprend au moins un élément de fermeture hermétique de ladite ouverture (8) du siège de logement (7).

7. Station (1) selon une ou plusieurs des revendications précédentes, **caractérisée par le fait que** lesdits moyens de couplage/découplage (6) comprennent au moins un élément de préhension réalisé au niveau d'au moins une partie dudit bloc-batterie amovible (5) et au moins un crochet associé à ladite structure porteuse (2) et mobile entre ladite configuration de découplage, dans laquelle ledit crochet est sensiblement écarté dudit élément de préhension, et ladite configuration de couplage, dans laquelle ledit crochet est engagé sur ledit élément de préhension pour la fixation dudit bloc-batterie amovible (5) à ladite structure porteuse (2).

8. Station (1) selon une ou plusieurs des revendications précédentes, **caractérisée par le fait que** lesdits moyens d'identification et d'authentification électroniques comprennent au moins un dispositif de réception récepteur d'ondes radioélectriques apte à recevoir au moins un signal d'identification.

9. Station (1) selon une ou plusieurs des revendications précédentes, **caractérisée par le fait que** ledit circuit de charge électrique (3) comprend au moins une paire de contacts laminaires positionnés à l'intérieur dudit siège de logement (7) et en contact avec les pôles dudit bloc-batterie amovible (5), lorsque ledit bloc-batterie amovible (5) est agencé à l'intérieur dudit siège de logement (7) et couplé à ladite structure porteuse (2).
